**Europäisches Patentamt**

**European Patent Office**

**Office européen des brevets**

(19)

(11) Veröffentlichungsnummer: **0 352 277**
**B1**

(12) **EUROPÄISCHE PATENTSCHRIFT**

(45) Veröffentlichungstag der Patentschrift: **31.10.90**

(51) Int. Cl.⁵: **B 60 K 41/08**

(21) Anmeldenummer: **88902473.3**

(22) Anmeldetag: **18.03.88**

(86) Internationale Anmeldenummer:
**PCT/EP88/00219**

(87) Internationale Veröffentlichungsnummer:
**WO 88/07457 06.10.88 Gazette 88/22**

(54) **EINRICHTUNG ZUR STEUERUNG EINER AUTOMATISCHEN KRAFTFAHRZEUGKUPPLUNG.**

(30) Priorität: **26.03.87 DE 3710015**

(43) Veröffentlichungstag der Anmeldung:
**31.01.90 Patentblatt 90/05**

(45) Bekanntmachung des Hinweises auf die
Patenterteilung:
**31.10.90 Patentblatt 90/44**

(84) Benannte Vertragsstaaten:
**DE GB NL SE**

(56) Entgegenhaltungen:
**WO-A-81/1951**
**DE-A-3 531 434**
**FR-A-2 483 649**
**FR-A-2 559 106**

**Patent Abstracts of Japan, Bd.10, Nr,37 (M-453)(2094), 14.02.1986**
**Patent Abstracts of Japan, Bd.10, Nr.21 (M-449)(2078), 28.01.1986**

(73) Patentinhaber: **ZAHNRADFABRIK FRIEDRICHSHAFEN AKTIENGESELLSCHAFT Löwentaler Strasse 100 Postfach 2520 D-7990 Friedrichshafen 1 (DE)**

(72) Erfinder: **PETZOLD, Rainer Oberhofstra e 79 D-7990 Friedrichshafen (DE)**
Erfinder: **WIENCEK, Norbert Ittendorferstra e 1 D-7759 Hagnau (DE)**

(74) Vertreter: **Raue, Reimund Zahnradfabrik Friedrichshafen AG Löwentaler Strasse 100 Postfach 2520 D-7990 Friedrichshafen 1 (DE)**

Courier Press, Leamington Spa, England.

**Beschreibung**

Diese Erfindung betrifft eine Einrichtung zur Steuerung einer automatischen Kraftfahrzeugkupplung nach dem Oberbegriff von Anspruch 1.

Aus der WO-A-88/01951 (Veröffentlichungsdatum 24.03.88) Einrichtung zur Steuerung einer automatischen Kraftfahrzeugkupplung bekannt. Mit dieser Einrichtung wird eine dem unterschied-lichen Anfahrwiderständen gut angepaßte Grund-einrückgeschwindigkeit schnell wirksam und über Korrekturfaktoren und Beeinflussungsmechanismen ist es möglich, den Anfahrvorgang nicht nur schnell, sondern auch qualitativ gut zu gestalten.

Zur Erzielung von z.B. möglichst günstigen Kraftstoffverbrauchswerten haben moderne Automatgetriebe auch Fahrprogramme mit relativ tiefen Schaltpunkten, so daß bei tiefen Motor-drehzahlen Motorschwingungen auftreten kön-nen. Während bei einem Automatgetriebe mit vorgeschalteten hydrodynamischen Drehmomentwandler diese Schwingungen sich nicht fortsetzen können, werden diese in einer automatischen Kupplungs-Getriebekombination über die Kupplung auf das Getriebe leicht übertragen, obwohl in solchen Kupplungen bereits mecha-nisch wirkende Dämpfer gegen Drehschwingun-gen angeordnet sind.

Es ist aus der FR-A-2 559 106 schon bekannt, zur automatischen Einstellung einer Kupplung durch gezielte Änderung des Kupplungsmomentes Tor-sionsschwingungen im Antriebsstrang zu dämp-fen. Die Ermittlung dieser Schwingungen sowie die Ermittlung des Korrekturwertes ist aber kompliziert und aufwendig und erfordert neben einem erheblichen Rechen- und damit Zeitaufwand auch die Berücksichtigung von Kennwerten, die zur Eingabe in den Speicher vorher bestimmt werden müssen. Diese Kennwerte, z.B. die Torsionssteifigkeit in den jeweiligen Gängen, können aber zwischen den jeweiligen Antriebssträngen von dem Prinzip gleichen Getrieben schwanken, so daß neben dem hohen Aufwand die tatsächlich im Antriebsstrang vorhandenen Bedingungen nicht voll berücksichtigt werden.

Es ist deshalb Aufgabe der Erfindung, eine Einrichtung zur Steuerung einer automatischen Kraftfahrzeugkupplung nach dem Oberbegriff von Anspruch 1 so weiterzuentwickeln, daß unzulässige Schwingungen im Antriebsstrang, -Motor, Kupplung, Getriebe- mit einfachen Mitteln beseitigt werden oder die Entstehung ganz verhindert wird.

Diese Aufgabe wird mit den kennzeichnenden Merkmalen von den Ansprüchen 1 bzw. 8 erfüllt.

Infolge der festgelegten bzw. bestimmten Öffnung der Kupplung sofort nach dem Erkennen der Schwingungen aus der Motordrehzahl werden die Momentspitzen in Reibung umgesetzt und demzufolge nicht weiter in das Getriebe übertragen. In relativ einfacher Weise ist es möglich, den Umlenkpunkt der Motordrehzahl zu erfassen, indem das Motormoment und das durch die Kupplung übertragbare Moment gleich sind. Wird die Kupplung also definiert - festgelegt bzw.

vorbestimmt - auf die Wegmarke dieses Punktes geöffnet und damit nur das Motormoment in der Kupplung weiter in das Getriebe übertragen, sind die Schwingungen beseitigt, ohne daß Übertragungsverluste auftreten, weil nur die Momentspitzen in Reibung umgesetzt werden. Für besonders schwingungsgefährdete Antriebsstränge, wenn z.B. der Motor vorwiegend in sehr tiefen Drehzahlen arbeitet, ist es auch denkbar, die Kupplung nur bis zu dieser Wegmarke zu schließen, bei der das Motormoment und das durch die Kupplung übertragbare Moment gleich sind. Jede sich anbahnende Schwingung wird dann in der Kupplung sofort in Reibung umgesetzt, so daß sie gar nicht erst in den unzulässigen Bereich kommen kann. Dabei kann es praktikabel sein, die abzuspeichernde Wegmarke für den Umlenk-punkt unter Berücksichtigung eines Korrekturfak-tors zu erfassen, um mit Sicherheit aus der Rutschphase der Kupplung herauszukommen. Es können damit denkbare Übertragungsverluste vermieden werden. Der Korrekturfaktor kann dabei konstant aber z.B. auch momentabhängig sein.

Aus der JP-A-60 19 18 28 ist eine Vorrichtung mit einer manuell betätigten Kupplung bekannt, in der Vibrationen, die im Antriebsstrang nach dem Getriebe über einen Tacho-Generator festgestellt über eine halb geöffnete Kupplung beseitigt wird. Die Kupplungsbetätigung für die halbe Öffnung erfolgt dabei über eine Kontrollanlage mit einem Magnetventil, das den Betätigungszylinder, der manuell beaufschlagt wird, für die Kupp-lungsbetätigung der Vibrationsbeseitigung über-lagert. Eine so ausgestaltete Kupplungsbeeinflus-sung ist in einem modernen Antriebsstrang nicht mehr verwendbar.

Weiter ist aus einer Steuerung für eine Rutschkupplung nach der DE-A-3 531 434 bekannt, eine Kupplung so einzustellen, daß das Rutschmoment an der Kupplung gleich oder nur geringfügig größer ist als das von der Antriebsseite zu übertragende Moment. Diese Einstellung erfolgt aber im Zusammenhang mit Drehzahldifferenzen, die sich infolge von Lastüberschreitungen vor und nach der Kupplung ergeben.

Einzelheiten der Erfindung werden anhand von Zeichnungen und einem Ausführungsbeispiel erläutert. Es zeigen:

Fig. 1 ein Blockschaltbild eines Antriebsstranges in Verbindung mit einer automatischen Kupplung;

Fig. 2 eine Motor- und Getriebeeingangsdrehzahlkurve in einem Anfahrvorgang aufgetragen über der Zeit;

Fig. 3 eine Kennlinie des übertragbaren Momentes in Abhängigkeit vom Weg der Kupplung;

Fig. 4 eine Drehzahlkurve mit einer Schwingung.

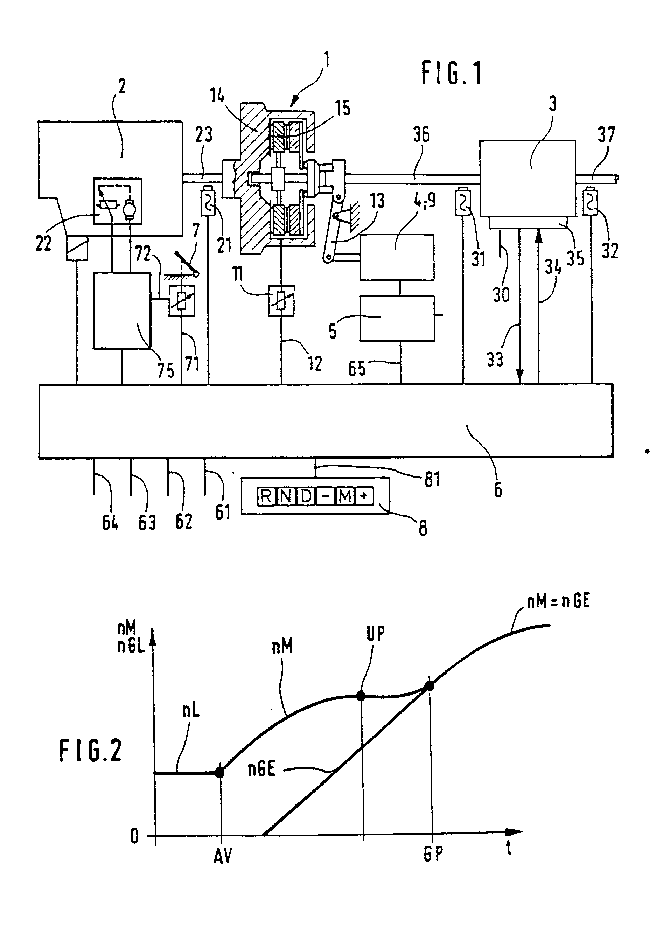

In Fig. 1 ist mit 1 die automatische Kupplung, die z.B. als Trockenkupplung ausgeführt sein kann, die über Federn geschlossen und über eine Stelleinrichtung 4 geöffnet wird, dargestellt. Die Kupplung 1 ist zwischen Antriebsmotor 2 und einem Getriebe 3, z.B. einem automatischen und synchronisierten Wechselgetriebe, im Antriebsstrang 2, 1, 3 angeordnet. Drehzahlfühler 21, 31, 32 ermitteln die Motordrehzahl nM, die Getriebe-Eingangsdrehzahl nGE und die Getriebe-Abtriebsdrehzahl nab und sind z.B. an der Motorabtriebswelle 23 der Getriebe-Eingangswelle 36 und der Getriebe-Abtriebswelle 37 angeordnet. Das elektronische Steuergerät 6, das in bekannter nicht dargestellter Weise aus einer Eingabeeinheit, einer Ausgabeeinheit, einem oder mehreren Speichern und Mikroprozessoren besteht, erhält Informationen über die Leitung 81 von einem Fahrschalter 8, der z.B. eine Neutralstellung N, eine Rückwärtsfahrstellung R, eine Vorwärtsfahrstellung D sowie einen Schalter für eine manuelle Fahrweise M hat. Mit den Tasten Minus und Plus lassen sich bei jeder Betätigung in Verbindung mit der Taste M Hoch- und Rückschaltung jeweils über einen Gang durchführen. Weitere Informationen erhält das elektronische Steuergerät 6 über die Stellung der Fußbremse, Leitung 61, der Handbremse, Leitung 62, des Kick-down-Schalters, Leitung 63, sowie der Motorbremsbetätigung, Leitung 64. Der Weg der Kupplung 1 wird über eine Wegmeßeinrichtung 11 erfaßt und über die Leitung 12 gleichfalls dem elektronischen Steuergerät 6 als Information zugeführt. Das Getriebe 3 hat noch einen Schaltventilblock 35, der seine Schaltbefehle über die Leitung 34 vom elektronischen Steuergerät 6 erhält, wobei die jeweilige Gangstellung über die Leitung 33 dem elektronischen Steuergerät zurückgemeldet wird. Eine Hilfskraft, z.B. Luft oder Hydraulikflüssigkeit, wird über die Leitung 30 dem Schaltventil 35 zum Schalten der Gänge zugeleitet.

Die Fig. 2 zeigt die Drehzahlkurven vom Motor nM und die Kurve der Getriebe-Eingangsdrehzahl nGE in einem Anfahrvorgang und über der Zeit t aufgetragen. nL ist die Leerlaufdrehzahl des Antriebsmotors 2 und GP der Punkt, an dem die Kupplung 1 voll geschlossen ist.

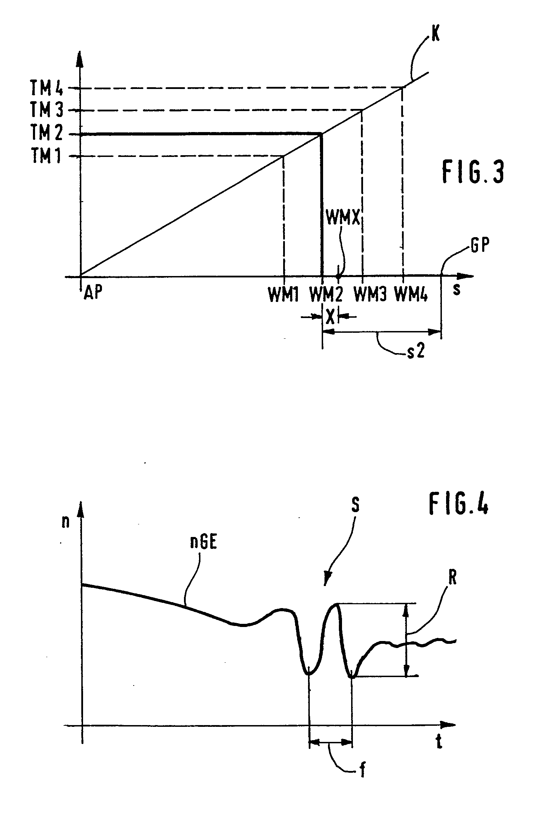

Die Fig. 3 zeigt eine Kennlinie K, die aus einer Vielzahl von gemessenen Wegmarken WM 1 bis 3 der Kupplung 1 mit den zugeordneten Momenten TM 1 bis 3 gebildet und im elektronischen Steuergerät 6 abgespeichert wurde. Die Wegmarken WM 1 bis 3 der Kupplung 1, die zwischen dem Anlagepunkt AP und dem Punkt der völlig geschlossenen Kupplung GP liegen, sind immer zum Zeitpunkt gemessen worden, an dem das Motormoment TM und das durch die Kupplung übertragene Moment TGE, was in das Getriebe 3 eingeleitet wird, gleich sind. Dies ist der Umlenkpunkt UP der Motordrehzahl nM bei jedem Anfahrvorgang.

Die in Fig. 4 gezeigte Drehzahlkurve nGE von der Getriebeeingangswelle 36 ist über der Zeit t aufgetragen. In einem relativ niederen Drehzahlbereich ist eine Schwingung S dargestellt, die aus der Frequenz f derselben und der Amplitude R als nicht zulässig erkannt wird. Geringfügige Schwingungen mit einer geringen Frequenz und einer kleinen Amplitude treten fast immer auf und sind unschädlich.

Die definierte Öffnung der Kupplung 1 wird bei jedem Anfahrvorgang ermittelt. Mit der Betätigung des Gaspedals 7 steigt die Motordrehzahl nM von der Leerlaufdrehzahl nL aus je nach Gaspedalstellung steiler oder flacher an, und die Kupplung 1 beginnt sich zu schließen.

Nach kurzer Zeit wird auch die dem Getriebe 3 zugeordnete Kupplungshälfte 15 mitgenommen. Während die Drehzahl der Getriebe-Eingangswelle nGE relativ schnell ansteigt, verringert sich der Drehzahlanstieg der Motordrehzahl nM und damit der dem Antriebsmotor zugeordneten Kupplungshälfte 14. Am Umlenkpunkt Up, also an dem Punkt, an dem die Motordrehzahl nM nicht weiter ansteigt, ist das Motormoment TM gleich dem Moment TGE, das von der Kupplung 3 übertragen wird. Dieser Punkt ist leicht erkennbar. Die diesem Umlenkpunkt UP zugeordnete Wegmarke, z.B. WM 2, die durch die Wegmeßeinrichtung 11 erkannt wird, wird nunmehr im elektronischen Steuergerät gespeichert. Gleichzeitig wird das in diesem Zeitpunkt anliegende Motormoment TM 2, das z.B. aus der elektronischen Gasbetätigung 75 abgeleitet ist, abgespeichert. Aus einer Vielzahl von Anfahrvorgängen und damit aus dem jeweiligen Umlenkpunkt UP wie beschrieben ermittelte Wegmarken WM 1 bis 3 und Motorenmomente TM 1 bis 3 wird im elektronischen Steuergerät eine Kennlinie K errechnet und abgespeichert, so daß auch beim Anfahren mit dem Umlenkpunkt UP nicht ermittelte Motormomente z.B. TM 4 eine Wegmarke WM 4 zugeordnet werden kann. Die Kennlinie wird infolge der fortlaufenden Messungen und Abspeicherung der dem Umlenkpunkt UP bei jedem Anfahrvorgang zugeordneten Momente TM und Wegmarken WM immer aktueller und ein auftretender Kupplungsverschleiß hat keinen nachteiligen Einfluß.

Werden beim Messen z.B. der Motordrehzahl nM, die ja nach Beendigung des Anfahrvorganges auch die Getriebe- Eingangsdrehzahl nGE ist, nicht zulässige Schwingungen S erkannt, wird die Kupplung 1 sofort auf die dem anliegenden Motormoment, z.B. TM 2, entsprechende Wegmarke WM 2, die aus der Kennlinie K ermittelt wird, um den Weg S 2 geöffnet. Damit wird nur noch das Motormoment TM 2 von der Kupplung 3 übertragen, und die Momentspitzen aus den Schwingungen S werden in Reibung umgesetzt. Damit weicht auch die Getriebe-Eingangsdrehzahl nGE geringfügig von der Motordrehzahl nM ab.

Das erneute Schließen der Kupplung 1 über den Weg S 2 bis zum Punkt GP erfolgt in Abhängigkeit von der Stellung des Gaspedals 7, wobei die Schließgeschwindigkeit gleichfalls über diese Abhängigkeit ermittelt wird. Anstelle der Gaspedalstellung kann auch die Veränderung des Motormomentes und/oder die Veränderung der Motordrehzahl den Schließvorgang einleiten und die Schließgeschwindigkeit bestimmen.

Bei besonders schwingungsgefährdeten Antriebsmotoren 2 kann es auch zweckmäßig sein, die Kupplung 1 generell nur bis zur Schlupfgrenze, also bis zum Umlenkpunkt UP der Motordrehzahl nM und damit der zugeordneten Wegmarke WM zu schließen. Damit werden alle vom Antriebsmotor kommenden nicht zulässigen Schwingungen in der Kupplung 1 infolge von Reibung gedämpft oder beseitigt. Über eine fest oder vom Motormoment TM abhängigen Korrekturfaktor X, der zur Wegmarke WM zugeschlagen wird, kann die Schließstellung WMX der Kupplung in einem sicheren Bereich für die Momentübertragung verlagert werden. Wenn ein geringer Dauerschlupf vorgesehen ist, kann der Korrekturfaktor X auch von der Wegmarke WM abgezogen werden. Die Einstellung der von dem elektronischen Steuergerät 6 ermittelten jeweiligen Wegmarke WM 1 bis 4, WMX erfolgt über die Steuereinrichtung 5, Stelleinrichtung 4 bzw. dem Stellmotor 9 sowie dem Kupplungshebel 13.

Die Erfindung ist nicht auf die im Ausführungsbeispiel dargestellte Lösung begrenzt, so kann z. B. die Kupplung 1 auch über einen nicht dargestellten Druckkolben betätigt werden. In einer solchen Kupplung wird am Umlenkpunkt UP der Motordrehzahl nM nicht eine zugeordnete Wegmarke WM, sonderen eine Druckmarke gespeichert. Der errechneten und gespeicherten Kennlinie sind dann Motormomente TM und entsprechende Drücke zugeordnet.

**Patentansprüche**

1. Einrichtung zur Steuerung einer automatischen Kraftfahrzeugkupplung (1), die zwischen einem Antriebsmotor (2) und einem Getriebe (3) angeordnet ist und vorrangig als Anfahrkupplung wirkt, in der auch das Motormoment (TM) und die Drehzahlen (nM, nGE) vor und hinter der Kupplung (1) erfaßt oder ermittelt werden und mit einer Steuereinrichtung (5), die ein von einem elektronischen Steuergerät (6) kommendes elektrisches Signal in eine Steuergröße für eine Stelleinrichtung (4) zum Öffnen oder Schließen der Kupplung umwandelt, wobei die Kupplung sowohl für das Anfahren und Schalten sowie für die Dämpfung von Torsionsschwingungen im Antriebsstrang betätigt wird, dadurch gekennzeichnet, daß aus der Frequenz (f) und der Amplitude (R) der Motor (nM) und/oder der Getriebe-Eingangsdrehzahl (nGE) nicht zulässige Schwingungen im Antriebsstrang zwischen Antriebsmotor (2), Kupplung (1) und Getriebe (3) erkannt und durch eine aus den Bedingungen beim Anfahren ermittelte vorbestimmte Öffnung der Kupplung (1) beseitigt werden.

2. Steuerung nach Anspruch 1, dadurch gekennzeichnet, daß bei jedem Anfahrvorgang der Umlenkpunkt (UP) der Motordrehzahl (nM) erfaßt und das diesem Umlenkpunkt zugeordnete Motormoment (TM 2) und die Wegmarke (WM 2) vom Kupplungsweg im elektronischen Steuergerät (6) gespeichert wird.

3. Steuerung nach Anspruch 1, dadurch gekennzeichnet, daß aus einer Vielzahl von gespeicherten Wegmarken (WM 1 bis WM 4) und Motormomenten (TM 1 bis TM 4) im elektronischen Steuergerät (6) eine Kennlinie (K) abgespeichert wird, die durch laufende Messungen immer erneuert und infolge der Häufigkeit der Messungen verbessert wird.

4. Steuerung nach Anspruch 3, dadurch gekennzeichnet, daß die Kupplung (1) beim Erkennen einer nicht zulässigen Schwingung (S) bis zur dem gerade anliegenden Motormoment (TM 2) zugeordneten Wegmarke (WM 2) kurzzeitig geöffnet wird.

5. Steuerung nach Anspruch 4, dadurch gekennzeichnet, daß ein erneutes Schließen der Kupplung (1) in einer festgelegten Weise erfolgt.

6. Steuerung nach Anspruch 5, dadurch gekennzeichnet, daß das Schließen der Kupplung (1) in Abhängigkeit von der Stellung des Gaspedals (7) erfolgt.

7. Steuerung nach Anspruch 5, dadurch gekennzeichnet, daß das Schließen der Kupplung (1) in Abhängigkeit von der Veränderung des Motormomentes (TM) aus erfolgt.

8. Steuerung nach dem Oberbegriff von Anspruch 1, dadurch gekennzeichnet, daß bei jedem Anfahrvorgang im Umlenkpunkt (UP) der Motordrehzahl (nM) die zugeordneten Motormomente (TM) und Wegmarken (WM) vom Kupplungsweg gespeichert und zu einer Kennlinie (K) zusammengefaßt werden, die durch laufende Messungen immer erneuert und infolge der Häufigkeit der Messungen verbessert wird, und daß in Abhängigkeit vom Motormoment (TM) die Kupplung (1) im Prinzip immer nur bis zu der diesem Moment zugeordneten Wegmarke (WM) geschlossen wird.

9. Steuerung nach Anspruch 8, dadurch gekennzeichnet, daß die jeweilige Schließstellung (WMX) der Kupplung (1) der dem anliegenden Motormoment (TM) zugeordneten Wegmarke (WM) plus oder minus eines feststehenden oder im Verhältnis zum Motormoment (TM) sich verändernden Korrekturfaktors (X) entspricht.

**Revendications**

1. Dispositif de réglage d'un embrayage de véhicule automatique (1), placé entre un moteur d'entraînement (2) et une boîte de vitesses (3) et fonctionnant en priorité comme embrayage de démarrage, dans lequel sont également enregistrés ou déterminés le couple moteur (TM) et la vitesse de rotation (nM.nGE) en aval et en amont de l'embrayage (1), et pourvu d'un dispositif de réglage (5) transformant un signal électrique venant d'un dispositif de commande électronique (6) en valeur d'influence pour un dispositif de positionnement (4) commandant l'ouverture ou la fermeture de l'embrayage, l'embrayage étant actionné à la fois au démarrage et passage de vitesses, et pour l'amortissement de vibrations de torsion de la chaîne cinématique, il se caractérise par le fait que des vibrations non autorisées se produisant dans la chaîne cinématique entre le moteur d'entraînement (2), l'embrayage (1) et la boîte de vitesses (3), sont reconnues en fonction de la fréquence (f) et de l'amplitude (R) du moteur (nM) ou/et du régime d'entrée de la boîte de vitesses (nGE) et sont éliminées, par une ouverture d'embrayage (1) prédéterminée en fonction des conditions lors du démarrage.

2. Réglage selon la revendication 1, caractérisé en ce que, lors de chaque phase de démarrage, le point d'inversion (UP) du régime du moteur (nM) est détecté, et que le couple moteur correspondant à ce point d'inversion (TM2) et le repère (WM2) de la course d'embrayage sont mémorisés dans le dispositif de commande électronique (6).

3. Réglage selon la revendication 1, caractérisé en ce qu'une courbe caractéristique (K), établie en fonction d'une multitude de repères (WM 1 à WM 4) et de vitesses de rotation du moteur (TM 1 à TM 4) mémorisés, est enregistrée au dispositif de commande électronique (6), et est incessamment renouvelée par les mesures courantes et corrigée par la fréquence de ces mesures.

4. Réglage selon la revendication 3, caractérisé en ce que lors de la détection d'une vibration non autorisée (S), l'embrayage (1) s'ouvre un court instant jusqu'au repère (WM2) correspondant au couple moteur actuel (TM2).

5. Réglage selon la revendication 4, caractérisé en ce qu'une nouvelle fermeture de l'embrayage (1) se produit d'une façon déterminée.

6. Réglage selon la revendication 5, caractérisé en ce que la fermeture de l'embrayage (1) dépend de la position de la pédale d'accélérateur (7).

7. Réglage selon la revendication 5, caractérisé en ce que la fermeture de l'embrayage (1) dépend de la modification du couple moteur (TM).

8. Réglage selon le concept général de la revendication 1, caractérisé en ce que, lors de chaque démarrage au point d'inversion (UP) du régime du moteur (nM), les couples moteur (TM) et les repères (WM) correspondants de la course d'embrayage sont enregistrés et résumés par une courbe caractéristique (K) qui est sans cesse renouvelée par les mesures répétées et corrigée en fonction de la répétition de ces mesures, caractérisé également en ce que en fonction du couple moteur (TM), l'embrayage (1) n'est en principe fermé que jusqu'au repère (WM) correspondant à ce couple.

9. Réglage selon la revendication 8 caractérisé en ce que la position de fermeture respective (WMX) de l'embrayage (1) correspond au repère (WM) dépendant du couple moteur (TM) actuel plus ou moins un coefficient de correction (X) fixe ou variant en fonction du couple moteur (TM).

**Claims**

1. A device for controlling an automatic clutch (1) of a motor vehicle which is disposed between a drive engine (2) and a transmission (3) and acts as a matter of priority as a moving-off clutch, in which the engine torque (TM) and the rotational speed (nM nGE) in front of and behind the clutch (1) are also detected or ascertained, and having a control device (5) which converts an electric signal coming from an electrical control unit (6) into a control variable for an adjusting device (4) for opening or closing the clutch, the clutch being actuated for moving-off and for gear-change as well as for damping torsional vibrations in the drive train, characterised in that inadmissible vibrations in the drive train between the drive engine (2), clutch (1) and transmission (3) are detected from the frequency (f) and the amplitude (R) of the engine speed (nM) and/or of the input speed (nGE) of the transmission and are eliminated by predetermined opening of the clutch (1) determined from the conditions during moving-off.

2. A control as claimed in claim 1, characterised in that the deviation point (UP) of the engine speed (nM) is detected at each moving-off operation, and the engine torque (TM 2) associated with this deviation point, and the position mark (WM 2) of the clutch travel, are stored in the electronic control unit (6).

3. A control as claimed in claim 1, characterised in that a characteristic (K) (formed) from a plurality of stored (sic) position marks (WM 1 to WM 4) and engine torques (TM 1 to TM 4) is stored in the electronic control unit (6) and is constantly renewed by continual measurements and improved as a result of the frequency of the measurements.

4. A control as claimed in claim 3, characterised in that the clutch (1) is opened temporarily upon detection of an inadmissible vibration (S) up to the position mark (WM 2) associated with the engine torque (TM 2) just applied.

5. A control as claimed in claim 4, characterised in that renewed closing of the clutch (1) is effected in a stipulated manner.

6. A control as claimed in claim 5, characterised in that the clutch (1) is closed in dependence upon the position of the accelerator pedal (7).

7. A control as claimed in claim 5, characterised in that the clutch is closed in dependence upon the change in the engine torque (TM).

8, A control in accordance with the preamble of claim 1, characterised in that the associated engine torques (TM) and position marks (WM) of the clutch travel are stored upon each moving-off operation at the deviation point (UP) of the engine speed (nM) and are combined to form a characteristic (K) which is constantly renewed by continual measurements and improved as result of the frequency of the measurements, and that, in dependence upon the engine torque, the clutch (1) is in principle always closed only up to the position mark (WM) associated with this torque.

9. A control as claimed in claim 8, characterised in that the prevailing closed position (WMX) of the clutch (1) corresponds to the position mark (WM) associated with the applied engine torque (TM) plus or minus a correction factor (X) which is fixed or which varies in relation to the engine torque (TM).

FIG.1

FIG.2

FIG.3

FIG.4